# EUROPEAN PATENT SPECIFICATION

(11) **EP 2 486 187 B1**
(45) Date of publication and mention of the grant of the patent: **20.04.2016**
(21) Application number: 10808019.3
(22) Date of filing: 13.08.2010
(51) Int. Cl.: D21F 1/66, C02F 1/463, D21F 1/70, C02F 11/12

(54) **METHOD FOR DEWATERING A FIBER AND PARTICLE SUSPENSION IN THE MANUFACTURE OF PULP, PAPER OR BOARD**
VERFAHREN ZUR ENTWÄSSERUNG EINER FASER- UND PARTIKELSUSPENSION BEI DER HERSTELLUNG VON FASERSTOFF, PAPIER ODER KARTON
PROCÉDÉ POUR DÉSHYDRATER UNE SUSPENSION DE FIBRES ET DE PARTICULES DURANT LA PRODUCTION DE PÂTE À PAPIER, DE PAPIER OU DE CARTON

(30) Priority: 14.08.2009 FI 20095846
(43) Date of publication of application: 15.08.2012
(73) Proprietor: Suominen, Lauri Hannunpoika, San Diego CA 92121 (US)
(72) Inventor: ÅBACKA, Mikael, FI-02700 Kauniainen (FI); Hannu Suominen, 00180 Helsinkifi (FI)
(74) Representative: LEITZINGER OY
(86) International application number: PCT/FI2010/050631
(87) International publication number: WO 2011/018555

(56) References cited:
- EP-B1- 1 583 719
- WO-A1-97/44522
- US-A- 5 759 390
- PERNG: "Pilot Treatment of OCC-based Paper Mill Wastewater Using Pulsed Electrocoagulation", WATER QUALITY RESEARCH JOURNAL OF CANADA, vol. 42, no. 1, 2007, pages 63-71, XP55059590,

## Description

In papermaking, a large quantity of water is needed to circulate by way of a headbox. This water must be cleaned before allowing it back to the nature. In other respects as well, the treatment of water and the subsequent drying of a web by means of heat constitute a major cost factor in the manufacture of paper and board.

From document WATER QUALITY RESEARCH JOURNAL OF CANADA, vol. 42, no. 1, 2007, pages 63-71, XP55059590, article by PERNG: "Pilot Treatment of OCC-based Paper Mill Wastewater Using Pulsed Electrocoagulation", is prior known a dewatering method according to preamble of enclosed claim 1. In this prior known method an electrocoagulation reactor is formed of parallel iron plate electrodes having their polarity switched to avoid excessive iron plate erosion. After reactor the coagulated suspension is aerated and supplied to flocculation tank. The flocculated suspension is supplied to sedimentation tank for separation water from the flock.

It is an object of the invention to provide an improved method for dewatering a fiber suspension, such that applying the method to pulp, paper or board making shall result in substantial cost savings, less need for process chemicals, and many subsequently presented advantages in the manufacturing process and products, among other aspects, in the form of improving the runnability of manufacturing machines, the quality and microbiological cleanliness of a product.

This object is achieved by the invention on the basis of the characterizing features presented in the appended claim 1.

Preferred embodiments of the invention are presented in the dependent claims.

The invention will now be described in more detail by way of example in a papermaking process with reference to the accompanying drawing, in which

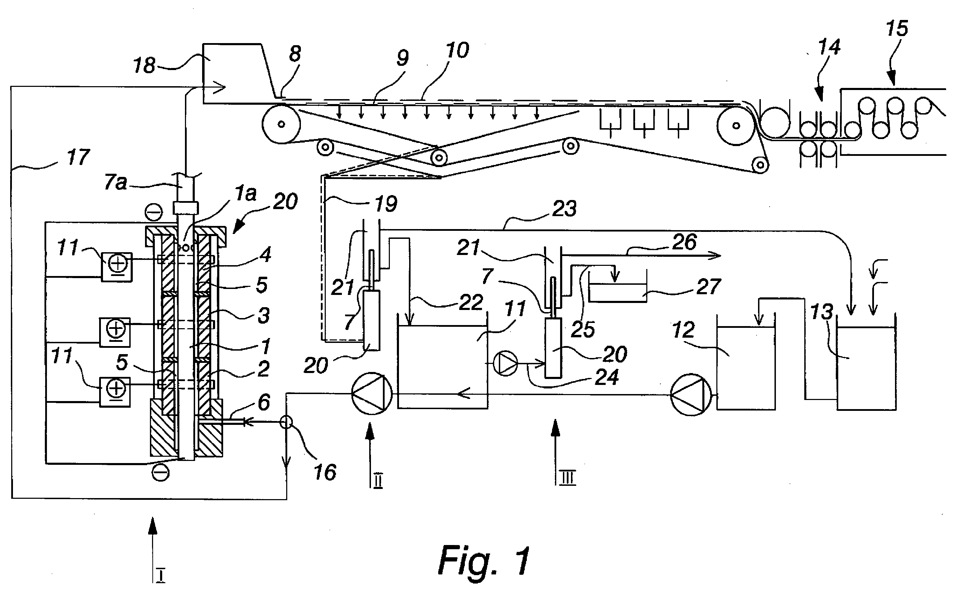

**fig. 1** shows schematically how a fiber suspension treated with a method of the invention is fed onto a wire (stage I), as well as how the water removed from a presently processed web is treated with a method of the invention (stages II and III).

In the following specification, an electrically operated reaction cell 20 will be referred to as an electrolytic cell, although this reaction cell differs from a conventional electrolytic cell in the sense that, in addition to dispersing the water molecules of a solution, the tubular or annular outer electrode, which defines a flow channel for the solution, becomes worn. Being made of aluminum or iron, this outer electrode generates, together with hydroxide ions created as a product of water decomposition, aluminum or iron hydroxide which works as a molecular sieve providing a desired separating function between water and particulates that can be very small indeed. In addition, hydrogen released in the reaction is utilized in the process of raising the molecular sieve to form a flock along with separated substances, after which the hydrogen leaves the process.

In fig. 1, the electrolytic cell 20 is shown in more detail in the confines of stage I, in which the method is applied to the actual production process. A corresponding electrolytic cell is described more thoroughly in Patent publication EP 1583719, dealing with the removal of impurities from wastewater.

In method stage I, the fiber suspension is passed by way of a pipe 6 into an electrolytic cell, including cell elements equipped with iron and/or aluminum electrodes 2, 3, 4. The cell elements are selected according to a fiber suspension and its additives used in a particular application. In stage I, it is preferred that the employed outer electrodes be solely aluminum electrodes. On the other hand, in stages II and III, the use of iron electrodes is also possible, preferably between the aluminum electrodes, whereby the iron finds its way into flock, not into purified water. If, when using iron electrodes, there is iron in purified water, the latter must be conducted through an iron oxidizer in order to remove the iron.

The tubular aluminum and/or iron electrodes 2, 3, 4 surround an inner electrode 1, resulting in a flow channel 5 therebetween. The electrodes 2, 3, 4 are connected to the plus pole of various power sources 11 and the electrode 1 to the minus pole thereof. The power sources are individually regulable in order to enable the optimization of currents for the cell elements equipped with different electrodes. The inner electrode 1 is made of stainless steel, nickel, chromium, or platinum.

The cell element equipped with an iron and/or aluminum electrode generates iron and/or aluminum hydroxide, which functions as a molecular sieve. This molecular sieve, and fibers and other therein trapped particles, such as fillers and additives used in papermaking, are enabled to rise by means of hydrogen released in electrolysis up to an upper part of the fiber suspension advancing on a wire 9 or in an separation tower 21, whereby purified water becomes separated into a lower part of the advancing fiber suspension. The fiber suspension is distributed through a slice 8 of a headbox 18 for a uniform web across the entire width of the dewatering wire 9. A transit time from the cell 20 to the slice 8 must be made sufficiently short for the separation of water and flock not to begin until on the wire 9. The electrolytic cell 20 enables regulating the size of flock for a consistent end result. In attachment with a riser pipe 7 or the headbox 18 can be provided a flock size measuring device, and the measuring result is used as a basis for adjusting the cell's 20 current. There are a sufficient number of electrolytic cells 20 side by side and the stock is fed from each cell by means of the riser pipe 7 into the headbox 18.

Purified water is removed from a bottom part of the advancing fiber suspension through the wire and collected in a wire pit 11. In case the fiber suspension is fed into the process traditionally without the reaction cell 20 of stage I, the water coming through the wire is cleaned of fiber residues, fillers, microbiological particles, etc. with a method of the invention by delivering the water along a pipe 19 into an electrolytic cell 20, which is basically similar to the one described above. From the cell 20, the reaction solution is conducted by way of a riser pipe 7 into an separation tower 21 for water and particles, wherefrom the purified water is led by way of a pipe 22 into the wire pit 11 and the flock of solid matter is delivered for example into a mixing box 13 for blending it therein with incoming streams of fiber suspension. From the mixing box 13, the fiber suspension is passed by way of a machine chest 12 into the wire pit 11, wherefrom the approximately 1-percent fiber suspension is conveyed by way of the electrolytic cells 20 of stage I back onto the wire. Water discharging from the pipe 22 is sufficiently clean to be used also as wire cleaning jet water and to be passed into a jet water tank 27.

Regardless of whether the invention is applied in stages I and II, the method of the invention can be applied also in stage III. In this case, water, which contains flour and the like particles passed through the wire, is pumped into a reaction cell 20 of stage III. From the cell 20, the reaction solution is conducted by way of a riser pipe 7 into an separation tower 21 for water and particles, wherefrom the purified water is passed by way of pipe 25 into a jet water tank 27 and the flock is led by a pipe or a conveyor 26 to further processing. Regarding the construction and operation of the water and flock separation tower 21, reference is made to patent publications US 5,888,359 and US 6,086,732.

Hence, in the proposed paper or board making process, purified water is used for the formation of a fiber suspension, i.e. water is circulated in the production process. As a result of this, fresh water only needs to be added in the amount equal to what disappears by evaporation from a drying section 15. If the invention is used in a pulp making process, the traditional headbox 18 and the wire section 9 are not absolutely necessary in the arrangement.

The method according to the invention can be employed in parallel with traditional papermaking, such that a parallel line 17 is avoid of the electrolytic cell 20, the fiber suspension being delivered by means of a distribution valve 16 optionally either to both or just one of the parallel supply lines 6/7 and/or 17. Of course, both supply lines can be separate from the outset, and being fed by separate pumps.

Accordingly, the dewatering method of the invention can also be used in such a way that stage I is not in service, but the water, which has been separated on the wire, is subjected to a separation of residues of fibers and fillers by means of the proposed molecular sieve method. This is another way of cleaning the circulation water and prohibiting all sorts of microbial growths due to an alkaline pH value of the purified water. This is of essential significance in terms of manufacturing a raw material for food and liquid containers.

The separation method's process parameters, such as the volume flow of a fiber suspension and the electrolytic current, can be regulated by means of a feedback, the adjustment value of which is based e.g. on the fiber and dry content of separated water or on the quality of resulting fiber flock. Of course, a measurement of the adjustment value can be conducted anywhere along the production line or from the final product.

The dewatering method according to the invention (when using stage I) enables providing, as early as in a dewatering step performed on the wire, a considerably drier stock flow than those achieved in traditional methods since, in addition to gravity, the existing separating forces are working within the flowing stock. There is also achieved a substantially higher degree of separation, because the resulting molecular sieves are able to trap remarkably small particles. In addition to this, water has a high pH and thereby the forming fiber web is microbiologically clean, which is a major benefit in the manufacture of board, paper, or pulp and which provides a solution to the thus far unsolved problem of germ elimination. Besides, the invention enables increasing the filler concentration, thus having an impact on the price and quality of the product. In particular, the effective web drying conserves energy and increases production capacity. If a method of the invention is applied in the concept of wire drying (stage I), the wire section can be made shorter than a conventional one. Retention is also improved, enabling a substantial reduction in the amount of retention and dewatering chemicals. As water drains more readily from the web, the felts remain cleaner and a better runnability is obtained as the felts are more durable. When the dry content increases downstream of the press section, the heat drying can be performed with less energy. The number of nips in a press section 14 can be diminished and/or the line pressures can be reduced. Intervals between washing and maintenance stoppages become longer, thus improving the degree of utilization. In addition, by virtue of water circulation, the invention enables the omission of existing wastewater treatment facilities, because makeup water is only needed in the amount equal to what drains out in the drying process.

The invention is particularly beneficial in the manufacturing processes of materials for liquid containers, because it has an inhibiting effect on the formation of germs and results in a microbiologically clean product.

## Claims

1. A method for dewatering a fiber and particle suspension in the manufacture of pulp, paper or board, wherein a fiber suspension is passed across an electrolytic cell and cell elements equipped with iron and/or aluminum electrodes (2, 3, 4) are used for generating iron and/or aluminum hydroxide working as a molecular sieve, **characterized in that** the fiber suspension is passed through a flow channel (5) between successive tubular electrodes (2, 3, 4) of aluminum and/or iron and an inner electrode (1) surrounding by the tubular electrodes (2, 3, 4) and made of stainless steel, nickel, chromium or platinum, the tubular electrodes (2, 3, 4) being connected to the plus pole of various power sources (11) and the inner electrode (1) being connected to the minus pole of the power sources (11), the method comprising the steps of
- individually regulating the power sources to regulate the currents of the cell elements equipped with different electrodes
- hydrogen released in electrolysis is used for raising the molecular sieve, and fibers and other possible fillers and particles trapped therein, into an upper part of the advancing fiber suspension, whereby purified water is separated into a lower part of the advancing fiber suspension (10), and
- purified water is removed from the lower part of the advancing fiber suspension (10).

2. A method as set forth in claim 1, **characterized in that** the advancing fiber suspension (10) is delivered by a head box onto a dewatering wire (9), through which the purified water is removed from the lower part of the advancing fiber suspension.

3. A method as set forth in claim 1 or 2, **characterized in that** the method is used in the manufacture of pulp, paper or board for the purification of water obtained through a dewatering wire (9).

4. A method as set forth in any of claims 1-3, **characterized in that** the water, which has been purified with the method, is used for producing a fiber suspension from which water is removed by the method of claim 1 or 2, i.e. water is circulated in the manufacture of pulp, paper or board.

5. A method as set forth in any of claims 1-4, **characterized in that** the water, which has been removed from the dewatering wire, is subjected to the separation of fibers and fillers with the method of claim 1, and at least some of the water is returned to the manufacture of pulp, paper or board.

6. A method as set forth in any of claims 1-5, **characterized in that** process parameters, such as the volume flow of the fiber suspension and the electrolytic current, are regulated by means of a feedback whose adjustment value is based on the fiber and filler content of the separated water or on the size of resulting fiber flock or on the on-line measurements of the grade of pulp, paper or board.

## Patentansprüche

1. Verfahren zur Entwässerung einer Faser- und Partikelsuspension bei der Herstellung von Faserstoff, Papier oder Karton, wobei eine Fasersuspension eine Elektrolytzelle durchläuft und Zellelemente, die mit Elektroden (2, 3, 4) aus Eisen und/oder Aluminium bestückt sind, verwendet werden, um Eisen- und/oder Aluminiumhydroxid, das als Molekularsieb arbeitet, zu erzeugen, **dadurch gekennzeichnet, dass** sich die Fasersuspension durch einen Strömungskanal (5) zwischen aufeinanderfolgenden, rohrförmigen Elektroden (2, 3, 4) aus Aluminium und/oder Eisen und einer inneren Elektrode (1), die von den rohrförmigen Elektroden (2, 3, 4) umgeben und aus rostfreiem Stahl, aus Nickel, Chrom oder aus Platin hergestellt ist, hindurchbewegt, wobei die rohrförmigen Elektroden (2, 3, 4) mit dem Pluspol verschiedener Energiequellen (11) verbunden sind und die innere Elektrode (1) mit dem Minuspol der Energiequellen (11) verbunden ist, wobei das Verfahren die folgenden Schritte umfasst:
- individuelles Regulieren der Energiequellen, um die Ströme der Zellelemente, die mit unterschiedlichen Elektroden bestückt sind, zu regulieren,
- der in der Elektrolyse freigesetzte Wasserstoff wird dazu verwendet, um das Molekularsieb und die darin eingefangenen Fasern und anderen möglichen Füllstoffe und Partikel in einen oberen Teil der sich vorwärts bewegenden Fasersuspension anzuheben, wodurch das gereinigte Wasser in einen unteren Teil der sich vorwärts bewegenden Fasersuspension (10) getrennt wird, und
- gereinigtes Wasser wird aus dem unteren Teil der sich vorwärts bewegenden Fasersuspension (10) entfernt.

2. Verfahren nach Anspruch 1, **dadurch gekennzeichnet, dass** die sich vorwärts bewegende Fasersuspension (10) durch einen Stoffauflaufkasten auf ein Entwässerungssieb (9) übergeben wird, durch das das gereinigte Wasser aus dem unteren Teil der sich vorwärts bewegenden Fasersuspension entfernt wird.

3. Verfahren nach Anspruch 1 oder 2, **dadurch gekennzeichnet, dass** das Verfahren bei der Herstellung von Faserstoff, Papier oder Karton für die Reinigung von Wasser, das durch ein Entwässerungssieb (9) erhalten wird, verwendet wird.

4. Verfahren nach einem der Ansprüche 1 bis 3, **dadurch gekennzeichnet, dass** das Wasser, das durch dieses Verfahren gereinigt worden ist, verwendet wird, um eine Fasersuspension herzustellen, aus der Wasser durch das Verfahren nach Anspruch 1 oder 2 entfernt wird, d.h. Wasser zirkuliert bei der Herstellung von Faserstoff, Papier oder Karton.

5. Verfahren nach einem der Ansprüche 1 bis 4, **dadurch gekennzeichnet, dass** das Wasser, das von dem Entwässerungssieb entfernt worden ist, der Trennung von Fasern und Füllstoffen mit dem Verfahren nach Anspruch 1 unterworfen wird, und dass mindestens etwas von dem Wasser für die Herstellung von Faserstoff, Papier oder Karton zurückgeleitet wird.

6. Verfahren nach einem der Ansprüche 1 bis 5, **dadurch gekennzeichnet, dass** die Verfahrensparameter wie etwa der Volumenstrom der Fasersuspension und der Elektrolytstrom mittels einer Rückkopplung reguliert werden, deren Anpassungswert auf der Basis des Faser- und Füllstoffgehalts des getrennten Wassers oder auf der Größe der resultierenden Faserflocken oder auf den online-Messungen der Qualität von Faserstoff, Papier oder Karton beruht.

## Revendications

1. Procédé pour déshydrater une suspension de fibres et de particules durant la production de pâte à papier, de papier ou de carton, dans lequel une suspension de fibres est guidée à travers une cellule électrolytique, et des éléments de cellule équipés d'électrodes de fer et/ou d'aluminium (2, 3, 4) sont utilisés pour générer de l'hydroxyde de fer et/ou d'aluminium agissant comme un tamis moléculaire, **caractérisé en ce que** la suspension de fibres est guidée à travers un canal d'écoulement (5) entre des électrodes tubulaires (2, 3, 4) successives d'aluminium et/ou de fer et une électrode interne (1) entourée par les électrodes tubulaires (2, 3, 4) et constituée d'acier inoxydable, de nickel, de chrome ou de platine, les électrodes tubulaires (2, 3, 4) étant connectées au pôle positif de différentes sources d'énergie (11), et l'électrode interne (1) étant connectée au pôle négatif des sources d'énergie (11), le procédé comprenant les étapes suivantes :
- régulation individuelle des sources d'énergie pour réguler les courants des éléments de cellule équipés de différentes électrodes,
- utilisation d'hydrogène libéré dans une électrolyse pour relever le tamis moléculaire, et des fibres et d'autres agents de charge et particules éventuellement piégés dans celui-ci, dans une partie supérieure de la suspension de fibres (10) en progression, et
- prélèvement d'eau purifiée à partir de la partie inférieure de la suspension de fibres (10) en progression.

2. Procédé selon la revendication 1, **caractérisé en ce que** la suspension de fibres (10) en progression est délivrée par une caisse de tête sur une toile de déshydratation (9), à travers laquelle l'eau purifiée est prélevée à partir de la partie inférieure de la suspension de fibres en progression.

3. Procédé selon la revendication 1 ou 2, **caractérisé en ce que** le procédé est utilisé dans la production de pâte à papier, de papier ou de carton, pour la purification d'eau obtenue à travers une toile de déshydratation (9).

4. Procédé selon l'une quelconque des revendications 1 à 3, **caractérisé en ce que** l'eau purifiée à l'aide du procédé est utilisée pour produire une suspension de fibres dans laquelle l'eau est prélevée à l'aide du procédé selon la revendication 1 ou 2, c'est-à-dire que de l'eau est mise en circulation dans la production de pâte à papier, de papier ou de carton.

5. Procédé selon l'une quelconque des revendications 1 à 4, **caractérisé en ce que** l'eau prélevée à partir de la toile de déshydratation est soumise à la séparation de fibres et d'agents de charge à l'aide du procédé selon la revendication 1, et au moins une partie de l'eau est renvoyée vers la production de pâte à papier, de papier ou de carton.

6. Procédé selon l'une quelconque des revendications 1 à 5, **caractérisé en ce que** des paramètres de procédé, tels que le débit volumétrique de la suspension de fibres et le courant électrolytique, sont réglés à l'aide d'une rétroaction dont la valeur de réglage est basée sur la part de fibres et d'agents de charge dans l'eau séparée, ou sur la taille d'un flocon de fibres ou sur des mesures en ligne de la qualité de la pâte à papier, du papier ou du carton.
